# NEUE EUROPÄISCHE PATENTSCHRIFT

(11) **EP 3 491 345 B2**
(45) Veröffentlichungstag und Bekanntmachung des Hinweises auf die Entscheidung über den Einspruch: **16.10.2024**
(45) Hinweis auf die Patenterteilung: 04.08.2021
(21) Anmeldenummer: 17729067.3
(22) Anmeldetag: 01.06.2017
(51) Int. Cl.: G01F 11/04, G01F 11/08, G01F 15/00, B05B 11/00, B05B 11/04

(54) **PUMPKOPF UND DOSIERVORRICHTUNG**
PUMP HEAD AND DOSING DEVICE
TÊTE DE POMPE ET DISPOSITIF DE DOSAGE

(30) Priorität: 14.07.2016 DE 102016212892
(43) Veröffentlichungstag der Anmeldung: 05.06.2019
(73) Patentinhaber: F. Holzer GmbH, 66386 St. Ingbert (DE)
(72) Erfinder: LEE, Hyeck-Hee, 66386 St. Ingbert (DE); STEINFELD, Ute, 66386 St. Ingbert (DE); MAHLER, Markus, 66333 Völklingen (DE); HOLZER, Frank, 66386 St. Ingbert (DE)
(74) Vertreter: Pfenning, Meinig & Partner mbB
(86) Internationale Anmeldenummer: PCT/EP2017/063346
(87) Internationale Veröffentlichungsnummer: WO 2018/010890

(56) Entgegenhaltungen:
- EP-A1- 1 164 362
- EP-A1- 2 130 610
- EP-A1- 2 383 553
- WO-A1-00/37179
- WO-A1-90/05091
- DE-A1- 102010 063 592
- DE-A1- 102012 217 338
- DE-A1- 102014 221 393
- DE-U1- 202012 012 770
- US-A- 3 759 425

## Beschreibung

Die vorliegende Erfindung betrifft einen Pumpkopf mit einem speziell ausgestalteten elastischen Ventil, der einen sicheren Verschluss des Pumpkopfes ermöglicht. Durch das Ventil ist gewährleistet, dass ein vollständiges Entleeren und gleichzeitig sicheres Verschließen des Pumpkopfes gewährleistet ist, so dass im Lagerzustand des Pumpkopfes keinerlei Reste von zu dosierenden Fluid verbleiben. Zudem betrifft die vorliegende Erfindung eine Dosiervorrichtung, die beispielsweise als Quetschflasche, als Non-Airless-System oder als Airless-System ausgebildet sein kann, wobei die Dosiervorrichtung einen erfindungsgemäßen Pumpkopf umfasst.

Aus dem Stand der Technik sind Dosiersysteme bekannt, wie beispielsweise Quetschflaschen, Non-Airless-Systeme oder Airless-Systeme. Diese Systeme zeichnen sich durch eine portionsweise Dosierung von abzugebendem Fluid oder durch kontinuierliche Abgabe von Fluid bei Applikation eines entsprechenden Drucks auf die Dosiervorrichtung aus. Ungelöst ist jedoch nach wie vor die Problematik, dass bei den meisten Systemen nach Abschluss des Dosiervorgangs Reste von Flüssigkeiten im Pumpkopf verbleiben. Dies ist insbesondere dann problematisch, wenn die verbleibende Flüssigkeit beispielsweise Nährboden für Bakterien oder Keime darstellen kann. Hierbei kann es zur Kontamination des gesamten Inhalts des Dosiersystems kommen, wodurch der Inhalt unbrauchbar wird. Ebenso problematisch ist, wenn verbleibende Reste einer zu dosierenden Flüssigkeit, beispielsweise einer Lösung im Pumpkopf verbleiben und dort eintrocknen. Gelöste Inhaltsstoffe können dann beispielsweise auskristallisieren, es kann zur Verklebung bzw. Verkrustung beweglicher Teile des Pumpkopfes kommen, wodurch das System ggfs. betriebsunfähig wird.

Die EP 2 130 610 A1 beschreibt einen Pumpkopf mit einem starren Ventil gemäß dem Stand der Technik.

Die Aufgabe der vorliegenden Erfindung ist es daher, einen Pumpkopf anzugeben, der die zuvor genannten Nachteile nicht aufweist.

Diese Aufgabe wird hinsichtlich eines Pumpkopfes mit den Merkmalen des Patentanspruchs 1, hinsichtlich einer Dosiervorrichtung mit den Merkmalen des Patentanspruchs 15 gelöst. Die jeweiligen abhängigen Patentansprüche stellen dabei vorteilhafte Weiterbildungen dar.

Die vorliegende Erfindung betrifft somit einen Pumpkopf für eine Dosiervorrichtung zur dosierten Abgabe eines Fluids, umfassend ein Kopfteil mit einer Austrittsöffnung für das abzugebende Fluid, wobei das Kopfteil eine innere Oberfläche aufweist, eine elastisches Ventil, das zumindest bereichsweise eine der inneren Oberfläche des Kopfteils entsprechende geometrische Ausgestaltung aufweist, ein erstes Bauteil 40, das eine Durchtrittsöffnung für das abzugebende Fluid aufweist, über die ein Einströmen des Fluids zwischen Kopfteil und elastischem Ventil unter Deformation des elastischen Ventils unter Ausbildung eines Zwischenraums zwischen elastischem Ventil und Kopfteil ermöglicht (Betätigungszustand (B)), wobei Kopfteil und erstes Bauteil 40 form- und kraftschlüssig unter Einschluss der elastischen Dichtung zwischen Kopfteil und erstes Bauteil 40 verbunden sind, und das elastische Ventil in einem Lagerzustand (A) des Pumpkopfes vollflächig formschlüssig auf der inneren Oberfläche des Kopfteils aufliegt, so dass eine fluidische Dichtung zwischen Kopfteil und erstes Bauteil 40 gewährleistet ist.

Gemäß der vorliegenden Erfindung sind somit das Kopfteil sowie das elastische Ventil aufeinander abgestimmt. Das elastische Ventil liegt dabei auf der inneren Oberfläche des Kopfteils auf, so dass ein vollständiger Verschluss der Austrittsöffnung gewährleistet ist. Aufgrund der Tatsache, dass das elastische Ventil zumindest bereichsweise elastisch ausgebildet ist, liegt das elastische Ventil vollflächig auf der inneren Oberfläche des Kopfteils auf, so dass im Lagerzustand keinerlei verbleibender Zwischenraum zwischen Kopfteil und elastischem Ventil verbleibt. Sämtliche zu dosierende Flüssigkeit wird somit am Ende des Dosiervorgangs, d.h. wenn der Pumpkopf von einem Betätigungszustand in einen Lagerzustand zurückkehrt, aus dem Pumpkopf über die Austrittsöffnung ausgegeben.

Die Austrittsöffnung kann dabei so ausgestaltet sein, dass mittels des Pumpkopfes das Fluid in Form von Tropfen oder in Form eines Sprühnebels abgegeben werden kann.

Das elastische Ventil umfasst einen Kopf und eine elastische Wandung, wobei der Kopf eine der inneren Oberfläche des Kopfteils entsprechende geometrische Ausgestaltung aufweist und die elastische Wandung verformbar ausgebildet ist.

Hierbei ist die Wandung des elastischen Ventils elastisch ausgebildet, wohingegen der Kopf starr ausgebildet sein kann und somit direkt an die Beschaffenheit der inneren Oberfläche des Kopfteils angepasst ist. Somit ist ein sicheres Eingreifen des Kopfes des elastischen Ventils in die innere Oberfläche des Kopfteils im Bereich der Austrittsöffnung gewährleistet.

Erfindungsgemäß weist die elastische Wandung mindestens eine Sollknickstelle auf, an der die elastische Wandung Überführen vom Lager- (A) in den Betätigungszustand (B) ab- bzw. einknickt.

Die Wandung des elastischen Ventils kann beispielsweise in Form eines Faltenbalgs ausgebildet sein. Im Betriebszustand knickt somit die Wandung des elastischen Ventils an den Sollknickstellen ein, während im Lagerzustand eine Streckung der Wandung erfolgt, so dass die Wandung ebenso auf der inneren Oberfläche des Kopfteils aufliegt.

Insbesondere vorteilhaft ist dabei, wenn die elastische Wandung aus einem Film eines elastisch verformbaren Materials, insbesondere aus einem thermoplastischen Kunststoff, Gummi und/oder Silicon, bevorzugt mit einer Dicke von 0,03 bis 1 mm, bevorzugt 0,08 bis 0,5 mm, besonders bevorzugt 0,20 bis 0,30 mm gebildet ist und/oder der Kopf massiv ausgebildet ist.

Der Kopf des elastischen Ventils kann vorzugsweise aus dem gleichen Material wie die elastische Wandung ausgebildet sein. Insbesondere sind Kopf und elastische Wandung einstückig ausgebildet und insbesondere simultan durch ein Spritzgussverfahren hergestellt.

In einer weiteren vorteilhaften Ausführungsform verfügt dass das elastische Ventil über mindestens ein Fixierelement, über das das elastische Ventil mit mindestens einem korrespondierendem Fixierelement des ersten Bauteils 40 kraftschlüssig verbunden ist, wobei bevorzugt das Fixierelement des elastischen Ventils und das Fixierelement des ersten Bauteils 40 als Einrastverbindung oder Schnappverbindung ausgebildet ist.

Weiter bevorzugt ist, wenn das erste Bauteil 40 eine Wandung aufweist, die den Zwischenraum abschließt, wobei über die Durchtrittsöffnung eine fluidische Kommunikation des Zwischenraums mit einem vom Zwischenraum aus gesehen jenseits der Wandung liegenden Bereich ermöglicht ist.

Gemäß dieser Ausführungsform können separate Bereiche innerhalb des Pumpkopfes ausgestaltet werden, über die ein sicheres Dosieren der Flüssigkeit möglich ist.

Gemäß einer weiteren bevorzugten Ausführungsform ist vorgesehen, dass die Durchtrittsöffnung vom Bereich unmittelbar durch die Wandung geführt ist und in den Bereich mündet, oder im Bereich durch eine seitliche Wandung des ersten Bauteils 40 durchgeführt wird, an einer äußeren Oberfläche des ersten Bauteils 40 in einer Einkerbung, die vom Bauteil begrenzt werden kann, geführt wird, und im Bereich erneut durch die seitliche Wandung des ersten Bauteils 40 geführt wird und in den Bereich mündet.

Insbesondere die letztgenannte Möglichkeit, wonach eine Einkerbung in der äußeren Oberfläche des Bauteils vorgesehen ist, ermöglicht eine bevorzugte Führung des Fluids in dem Zwischenraum zwischen dem Kopfteil und dem elastischen Ventil.

Besonders bevorzugt ist dabei, dass zwischen elastischem Ventil und erstem Bauteil 40 ein Element, das eine Rückstellkraft auf das elastische Ventil auswirkt, angeordnet ist, wobei die Rückstellkraft bewirkt, dass der im Betätigungszustand (B) ausgebildete Zwischenraum unter Rückkehr in den Lagerzustand (A) geschlossen wird. Das Element ist insbesondere eine Feder.

Weiter vorteilhaft ist dabei, dass das erste Bauteil 40 an seinem der elastischen Dichtung abgewandten Ende mit einem (zweiten) Bauteil 60 verbunden ist, über das der Pumpkopf (I) mit einem Vorratsgefäß (II) zur Bevorratung des abzugebenden Fluids verbindbar ist.

Hierbei ist es insbesondere von Vorteil, wenn zwischen dem ersten Bauteil 40 und dem zweiten Bauteil 60 mindestens ein Mittel zur sterilen Filtration eintretender Luft vorhanden ist (non-airless system), insbesondere ein Bakterienfilter, oder das erste Bauteil 40 gegenüber dem zweiten Bauteil 60 hermetisch dichtend ausgebildet ist (airless system).

Der für Non-Airless-Systeme ausgebildete Pumpkopf kann dabei insbesondere bei Quetschflaschen oder entsprechenden Dosiervorrichtungen mit Pumpkopf angewandt werden.

Bei Quetschflaschen findet dabei eine passive Betätigung des Pumpkopfes statt, da der fluidische Druck durch Betätigung der mit dem Pumpkopf verbundenen Quetschflasche erfolgt.

Hierbei kann das erste Bauteil 40 gegenüber dem zweiten Bauteil 60 fixiert sein. Diese Ausführungsform ist insbesondere für Dosiervorrichtungen, die eine Quetschflasche umfassen, vorteilhaft.

Im Falle von Dosiersystemen, bei denen Druck durch die Betätigung des Pumpkopfes selbst ausgebildet wird, findet eine aktive Betätigung des Pumpkopfes statt. Derartige Pumpköpfe können sowohl für Airless- als auch für Non-Airless-Dosiersysteme ausgebildet sein.

Bei derartigen Systeme ist es bevorzugt, wenn das erste Bauteil 40 gegenüber dem zweiten Bauteil 60 beweglich ausgebildet ist, wobei zwischen dem ersten Bauteil 40 und dem zweiten Bauteil 60 mindestens ein Mittel, das eine Rückstellkraft auf das erste Bauteil 40 ausübt, angeordnet ist, wobei das Bauteil bevorzugt eine Feder ist.

Diese Ausführungsform ist insbesondere für aktiv zu betreibende Pumpköpfe von Vorteil, hierbei kann durch Bewegung der einzelnen ersten und zweiten Bauteile 40 und 60 ein Druck auf das zu dosierende Fluid ausgeübt werden.

Weiter vorteilhaft hierbei ist, dass das zweite Bauteil 60 eine Aussparung, die bevorzugt zylindrisch ausgebildet ist, aufweist, in der ein Hohlkolben mit einem Durchtrittskanal beweglich führbar ist.

Bei dieser Ausführungsform kann vorgesehen sein, dass das zweite Bauteil 60 eine gegenüber dem ersten Bauteil 40 abschließend ausgebildete Wandung aufweist, die eine Durchtrittsöffnung aufweist, die mit einem beweglichen Hohlkolben verschließbar ist, wobei durch die Wandung ein zwischen erstem Bauteil 40 und zweitem Bauteil 60 mit der Durchtrittsöffnung in fluidischer Kommunikation stehender Bereich bzw. Zwischenraum ausgebildet ist, oder gegenüber dem ersten Bauteil 40 offen ausgebildet ist, wobei der Hohlkolben so im zweiten Bauteil 60 angeordnet ist, dass die Durchtrittsöffnung nicht vom Hohlkolben verschlossen wird.

Der Hohlkolben kann an seinem dem ersten Bauteil 40 abgewandten Ende beweglich in ein Pumpgehäuse geführt sein, das ein vom Pumpgehäuse und Hohlkolben definiertes Pumpvolumen aufweist, wobei im Lagerzustand (A) das Pumpvolumen maximiert und im Betätigungszustand (B) minimiert wird.

Eine weitere vorzugsweise Ausführungsform sieht vor, dass das Pumpgehäuse einen bodenseitigen Einlass umfasst, der bevorzugt mittels eines Ventils, insbesondere eines Scheibenventils oder Kugelventils während des Betätigungsvorgangs verschließbar und bei Überführen des Pumpkopfes vom Betätigungszustand (B) in den Lagerzustand (A) geöffnet werden kann. Eine derartige Ausführungsform ist insbesondere bei aktive betätigbaren Airless- und/oder Non-Airless-Pumpköpfen bevorzugt.

Bei Überführen des Pumpkopfes vom Betätigungszustand in den Lagerzustand strömt hierbei in einem Vorratsgefäß bevorratete Flüssigkeit durch Öffnen des Ventils in das Pumpgehäuse nach.

Am bodenseitigen Einlass des Pumpgehäuses kann zudem ein Steigrohr angeordnet sein. Diese Ausführungsform ist insbesondere bei Non-Airless-Systemen mit aktiv betätigbarem Pumpkopf von Vorteil. Für den Fall, dass es sich um ein Airless-System handelt, ist ein Steigrohr bei aktiv betreibbaren Pumpköpfen ggfs. nicht notwendig.

Eine weitere bevorzugte Variante des Pumpkopfes sieht vor, dass bei Verbindung des Pumpkopfes (I) über das zweite Bauteil 60 mit dem Vorratsgefäß (II) eine Dichtung zwischen zweitem Bauteil 60 und dem Vorratsgefäß (II), oder über die Pumpkammer mit dem Vorratsgefäß (II) eine Dichtung zwischen Pumpkammer und dem Vorratsgefäß (II) angeordnet ist.

Bevorzugt kann das Kopfteil ein antibakterielles Material, bevorzugt Metalle oder Metallionen, insbesondere Silberpartikel oder Silberionen beinhalten. Insbesondere ist das Kopfteil im Spritzgussverfahren herstellbar, hierbei kann beispielsweise ein antibakterielles Material direkt mit dem thermoplastischen Material, das zum Herstellen des Spritzgussteils verwendet wird, compoundiert werden.

Die Erfindung betrifft zudem eine Dosiervorrichtung, die einen wie voranstehend beschriebenen Pumpkopf umfasst. Der Pumpkopf ist dabei mit einem Vorratsgefäß verbunden.

Bevorzugt kann das Vorratsgefäß als Quetschflasche oder als formfester Behälter ausgebildet sein.

Ebenso ist es möglich, dass das Vorratsgefäß (II) einen Innenbeutel, der gegenüber dem Pumpkopf (I) hermetisch abgedichtet ist, umfasst, wobei der Innenbeutel insbesondere als Faltenbalg ausgebildet ist.

Diese Ausführungsform eignet sich insbesondere für Airless-Systeme.

Die Dosiervorrichtung gemäß der vorliegenden Erfindung eignet sich zur Bevorratung sowohl von Konservierungsmittel enthaltenden Fluiden bzw. Lösungen, insbesondere jedoch zur Bevorratung von Konservierungsmittel freien Fluiden bzw. Lösungen.

Die vorliegende Erfindung wird anhand der beigefügten Figuren näher beschrieben, ohne die Erfindung auf die speziell dargestellten Ausführungsformen zu beschränken.

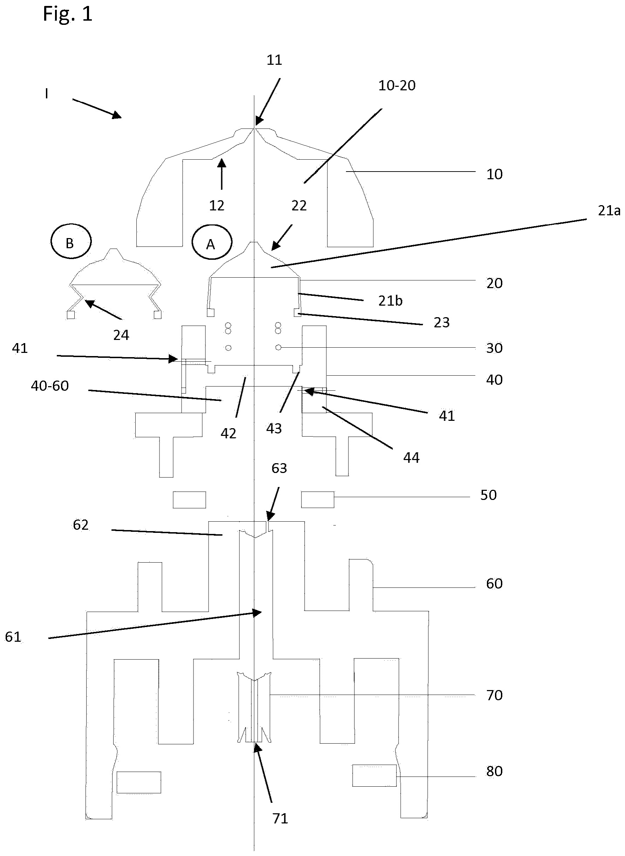

Figur 1 zeigt einen Pumpkopf I, der insbesondere als Dosierkopf für eine Quetschflasche geeignet ist. Der Pumpkopf I umfasst dabei ein Kopfteil 10 mit einer Auslassöffnung 11, die bevorzugt zur tropfenförmigen Abgabe von Fluiden ausgebildet sein kann. Ebenso ist es jedoch möglich, die Auslassöffnung so auszugestalten, dass ein Sprühnebel bei der Abgabe des Fluids erzeugbar ist. Das Kopfteil 10 sitzt dabei direkt auf einem Bauteil 40 auf und ist mit diesem form- und kraftschlüssig verbunden. Das Kopfteil 10 weist dabei eine innere Aussparung auf, die eine innere Oberfläche 12 aufweist. Zwischen Kopfteil 10 und Bauteil 40 ist ein elastisches Ventil 20 angeordnet, das einen Kopf 21a und eine elastische Wandung 21b aufweist. Das Ventil 20 ist in einem Lagerzustand (A) und einem Betätigungszustand (B) dargestellt. Erkennbar ist, dass im Betätigungszustand (B) die elastische Wandung 21b einknickt, hierzu enthält die elastische Wandung 21b eine Sollknickstelle 24, die im Betätigungszustand (B) ersichtlich sind. Im Lagerzustand (A) sind die Sollknickstellen 24 glatt gezogen. Der Kopf 21a des Ventils 20 kann dabei massiv ausgebildet sein, die elastische Wandung 21b als schlauchförmige Wandung an den Kopf 21a angefügt sein. Das komplett elastische Ventil 20 kann einstückig im Spritzgussverfahren hergestellt werden. An der elastischen Wandung 21b sind Fixierelemente 23, beispielsweise eine umlaufende Feder vorhanden. Über die Fixierelemente 23 ist das elastische Ventil 20 am Körper 40 fixiert. Hierzu werden die Fixierelemente 23 in korrespondierende Fixierelemente 43, beispielsweise eine umlaufende Nut, des Körpers 40 eingerastet. Die Oberfläche 22 des Kopfes 21a des Ventils 20 weist dabei eine identische Ausgestaltung auf, wie die innere Oberfläche 12 des Kopfteils 10, so dass der Kopf 21a des Ventils 20 im Lagerzustand (A) formschlüssig in das Kopfteil 10 eingreifen kann und somit die Auslassöffnung 11 vollständig verschließt. Hierdurch wird der im Betätigungszustand (B) ausgebildete Zwischenraum 10-20 zwischen Kopfteil 10 und elastischem Ventil 20 komplett verschlossen, sämtliches Fluid, das im Betätigungszustand zwischen Kopfteil 10 und elastischem Ventil 20 im Zwischenraum 10-20 vorhanden ist, wird bei Überführen des Pumpkopfes in den Lagerzustand aus der Auslassöffnung 11 ausgetragen. Das Bauteil 40 weist eine Wandung 42 auf, die baulich den Pumpkopf in einen oberen Teil (der Teil, der das Kopfteil und das elastische Ventil 20 umfasst) und einen unteren Teil (unterhalb der Wandung 42) trennt. Unterhalb der Wandung 42 des Bauteils 40 ist ein Bauteil 60 eingefügt, das formschlüssig mit dem Bauteil 40 verbindbar ist. Zwischen Bauteil 60 und Bauteil 40 resultiert ein Zwischenraum 40-60. Das Bauteil 40 weist dabei eine Durchlassöffnung 41 auf, die im beispielhaften, in Figur 1 dargestellten Fall derart ausgebildet ist, dass im unteren Teil des Bauteils 40 (auf Höhe des Zwischenraumes 40-60) die Durchlassöffnung 41 durch die Wandung 44 des Bauteils 40 durchgeführt ist und dort in einer (nicht dargestellten) Kerbe auf der äußeren Oberfläche des Bauteils 40 herum um das Bauteil 40 geführt ist. Die Kerbe kommuniziert dabei mit einem in Figur 1 links dargestellten, nach oben führenden Kanal, der in einer weiteren Durchlassöffnung 41 mündet, durch die das Fluid in den Zwischenraum 10-20 zwischen Ventil 20 und Kopfteil 10 führbar ist. Der auf der Oberfläche des Bauteils 40 geführte Kanal wird dabei vom aufgesteckten Bauteil 40 begrenzt und abgeschlossen.
   Das Bauteil 60 verfügt über eine kopfseitig angebrachte Wandung 62, in die eine exzentrische Durchgangsöffnung 63 eingefügt ist. Das Bauteil 60 wird dabei soweit ins Bauteil 40 eingesteckt, dass die Wandung 62 nicht direkt mit der Wandung 42 des Bauteils 40 abschließt, sondern ein zwischenbleibender Bereich 40-60 erhalten bleibt und somit die Durchgangsöffnung 41, die im unteren Teil des Bauteils 40 angeordnet ist, geöffnet bleibt. Im beispielhaften Fall des Pumpkopfes I nach Figur 1 ist zwischen Bauteil 40 und Bauteil 60 ein bakterienfilterndes Material 50, über das ein Luftaustausch des innenliegenden Bereichs des Pumpkopfes mit der Umgebung möglich ist, angebracht. Das Bauteil 60 verfügt über eine Aussparung 61, in die ein Hohlkolben 70 mit einem inneren Hohlvolumen 71 eingebracht ist. Der Hohlkolben 70 ist dabei in axialer Richtung (in Figur 1 nach oben und unten) beweglich in der Aussparung 61 angeordnet. Zudem kann der Pumpkopf über ein Dichtungselement 80 verfügen, über das ein abdichtendes Anbringen des Pumpkopfes I auf einem in Figur 1 nicht dargestellten Vorratsgefäß II möglich ist.

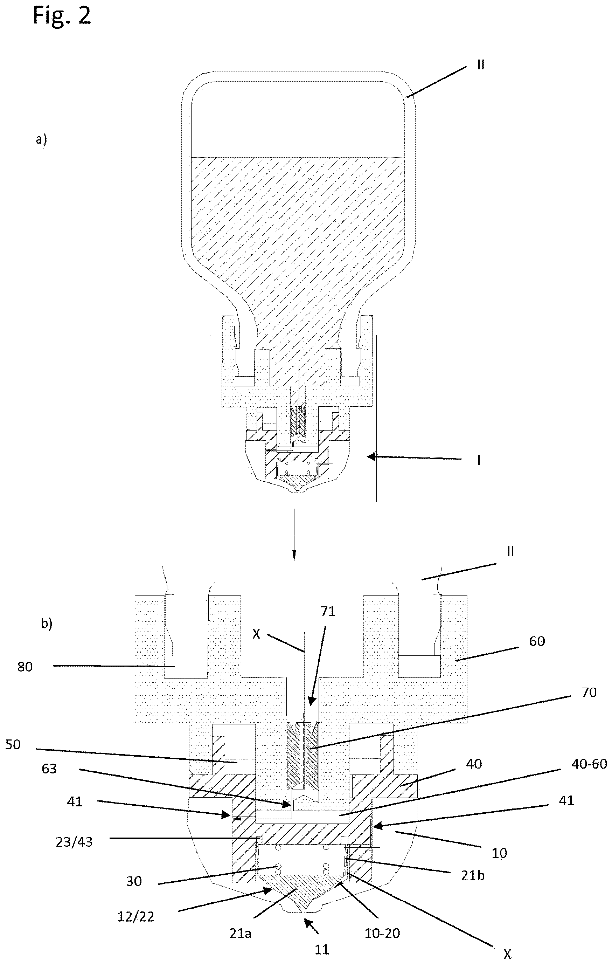

Figur 2 zeigt einen Pumpkopf I nach Figur 1, der auf einem Vorratsgefäß II, im Falle der Figur 2 einer Quetschflasche, dargestellt ist. Das Vorratsgefäß II beinhaltet dabei ein abzugebendes Fluid, das in Figur 2a im Vorratsgefäß II schraffiert dargestellt ist. Figur 2a zeigt einen Schnitt durch die Gesamtanordnung im Gebrauchszustand, Figur 2b das in Figur 2a umrandete Detail des Pumpkopfes I. Hierbei wurden die gleichen Bezugszeichen wie in Figur 1 dargestellt verwendet. In Figur 2b ist mit dem Pfeil X, der durch den Durchtrittskanal 71 des Hohlkolbens 70, durch den Zwischenbereich 40-60 zwischen Bauteil 60 und Bauteil 40, durch die Durchtrittsöffnung 41, durch den Zwischenraum 10-20, der sich bei Betätigung der Dosiervorrichtung gemäß Figur 2 ergibt, und schließlich in Richtung der Auslassöffnung 11 der Weg des Fluids aus dem Vorratsbehältnis II Richtung Auslassöffnung 11 angedeutet.

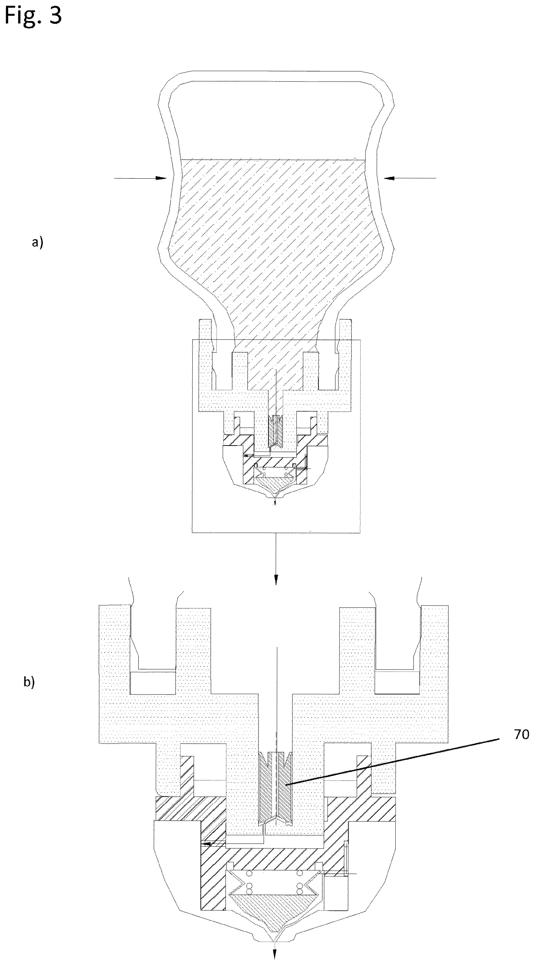

Figur 3 zeigt die gleiche Dosiervorrichtung gemäß Figur 2 bei Applikation eines Drucks (durch die Pfeile in Figur 3a angedeutet) auf die Quetschflasche II. Hierbei wird der Hohlkolben 70 (siehe Figur 3b) nach unten gedrückt (durch den Pfeil links neben Hohlkolben 70 angedeutet) und somit das sich unterhalb des Hohlkolbens 70 befindliche, vom Hohlkolben 70 und Bauteil 60 eingeschlossene Fluid durch die Durchgangsöffnung 43 des Bauteils 60 in den Zwischenraum 40-60 eingepresst. In Figur 3 sind mit Ausnahme des Bezugszeichens 70 aus Gründen der Übersichtlichkeit keine weiteren Bezugszeichen eingefügt. Das Fluid 41 wird über die Durchgangsöffnung 41 weiter in den Zwischenraum 10-20 zwischen elastischem Ventil 20 und Kopfteil 10 des Pumpkopfes I eingepresst. Hierbei findet eine Deformation des elastischen Ventils statt, das wie in Figur 3b gezeigt, abknickt und somit die Auslassöffnung 11 freigibt, wodurch das Fluid austreten kann. Aufgrund der Tatsache, dass durch den Durchtrittskanal 71 des Hohlkolbens 70 und die Durchtrittsöffnung 63 des Bauteils 60 nicht deckungsgleich angeordnet sind, findet bei Anstoßen des Hohlkolbens 70 an der Wandung 62 des Bauteils 60 ein Verschluss der Durchtrittsöffnung 63 statt. Somit ist auch bei weiterer Applikation von Druck kein weiteres Austreten eines Fluids aus der Dosiervorrichtung möglich, da der Durchtrittskanal 63 verschlossen ist. Mit diesem Pumpkopf I ist somit eine dosierte Abgabe von Flüssigkeit aus einer Quetschflasche möglich. Der in Figur 3b dargestellte Zustand entspricht dem Betätigungszustand (B) des Pumpkopfes.

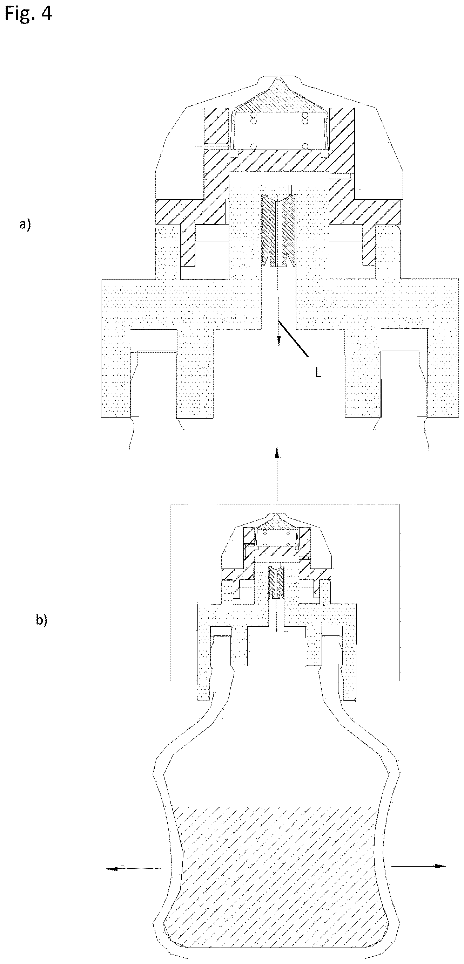

Figur 4 zeigt eine Ausführungsform, bei der eine Überführung der Dosiervorrichtung, insbesondere des Pumpkopfes, vom Betätigung- in den Lagerzustand erfolgt. Aus Gründen der Übersichtlichkeit sind keine Bezugszeichen dargestellt, es gelten jedoch die gleichen Ausführungen wie bei den vorstehenden Figuren. Figur 4a stellt dabei ein vergrößertes Detail der in Figur 4b dargestellten Dosiervorrichtung dar. Wie aus Figur 4a ersichtlich ist, ist der Hohlkolben 70 nach wie vor in der Endposition, die beim Betätigungsvorgang wie in Figur 3 dargestellt erreicht wird. Nach Beendigung des Betätigungsvorgangs kann die Dosiervorrichtung vom Benutzer in die Lagerposition überführt werden, wobei die Dosiervorrichtung, im Falle der Figur eine Quetschflasche, auf den Kopf gestellt wird. Hierbei lässt der Benutzer die Quetschflasche los, aufgrund der Rückstellkraft der Quetschflasche nimmt diese wieder ihre ursprüngliche Form, wie in Figur 2 dargestellt, ein. Die Rückstellkraft ist in Figur 4b durch die nach außen weisenden Pfeile dargestellt. Aufgrund des entnommenen Volumens an Flüssigkeit entsteht bei diesem Vorgang im Vorratsgefäß II ein Unterdruck, der sich über den Hohlkolben 70 in den Pumpkopf I der Dosiervorrichtung fortsetzt. Zum Druckausgleich wird über ein steriles Filter Luft in das Vorratsgefäß 2 eingesaugt. Bei diesem Vorgang wird auch der Hohlkolben 70 in seine Ausgangsposition zurückbewegt, d.h. im in Figur 4 dargestellten Fall wird der Hohlkolben 70 nach unten bewegt. Über das Bakterienfilter 50, das beispielsweise zwischen Bauteil 60 und Bauteil 40 vorhanden sein kann, ist ein Lufteintritt (Pfeil L) ins Innere des Vorratsgefäßes II, d.h. der Quetschflasche möglich.

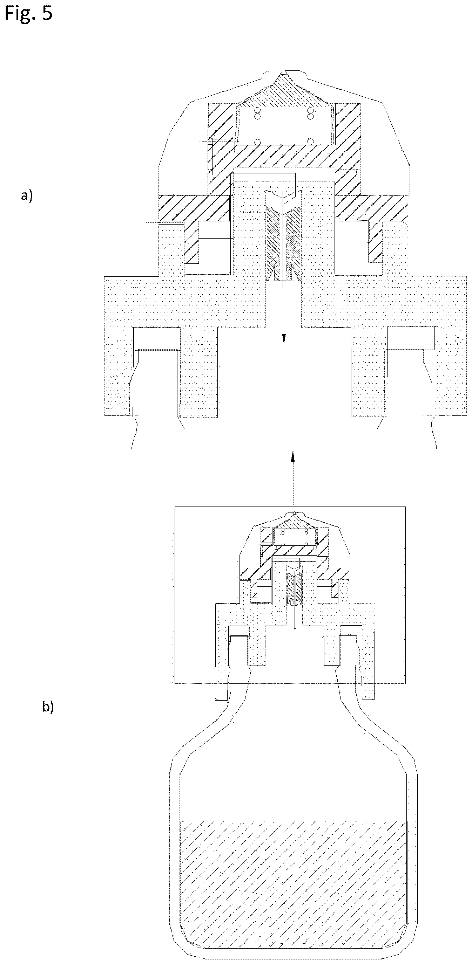

Figur 5 zeigt die Lagerposition (A) der Flasche, in der der Hohlkolben 70 in seiner Endposition dargestellt ist und die Quetschflasche II vollständig relaxiert ist (siehe Figur 5b).

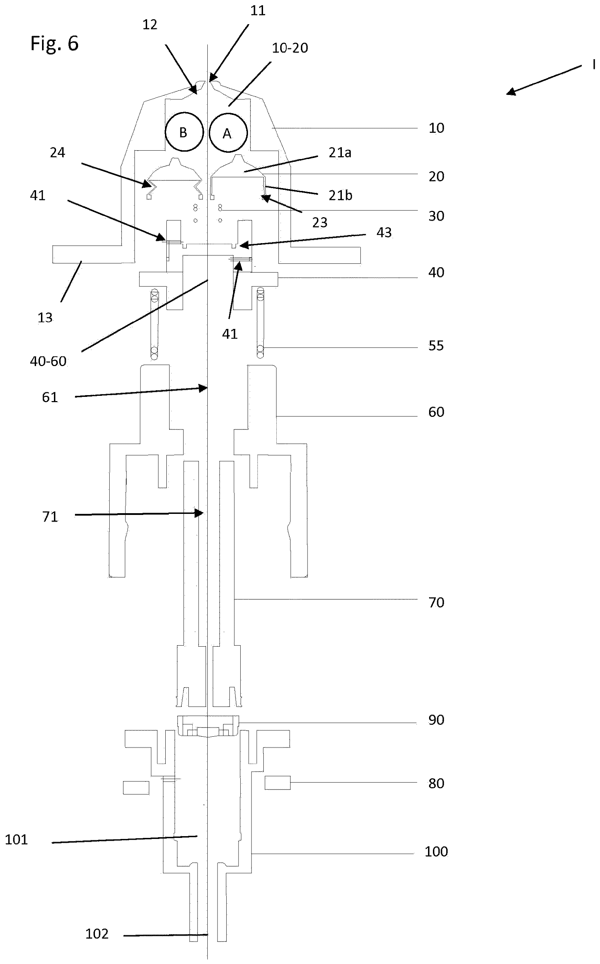

Figur 6 zeigt eine weitere Ausgestaltungsform eines erfindungsgemäßen Pumpkopfes, wobei die Bauteile 10, 20, 30 und 40 im Wesentlichen baugleich zu den entsprechenden Bauteilen nach Figur 1 ausgebildet sind. Die entsprechenden Bezugszeichen bezeichnen dabei identische Bauteile. Der wesentlichste Unterschied des Pumpkopfes I gemäß Figur 6 zum Pumpkopf I gemäß Figur 1 ist dabei, dass der Pumpkopf I gemäß Figur 6 aktiv betätigbar ist, d.h. die Bauteile 40 und 60 nicht fest miteinander verbunden sind, sondern über ein Federelement 55 gegeneinander beweglich ausgestaltet sind. Zur Ausführung dieser Bewegung umfasst das Kopfteil 10 dabei zusätzlich einen Griff 13, über den ein Benutzerdruck auf das Kopfteil ausüben kann und somit die Bauteile 10 bis 40 in Richtung des Bauteils 60 drücken kann. Im Unterschied zur Ausführungsform gemäß Figur 1 ist das Bauteil 60 dabei offen ausgebildet, d.h. weist keine nach oben abschließende Wandung 62 auf. Durch die Aussparung 61 des Bauteils 60 ist ein Hohlkolben 70 geführt, der einen Durchtrittskanal 71 aufweist. Der Hohlkolben mündet seinerseits in einem Pumpengehäuse 100, das ein Pumpenvolumen 101 und eine Einlassöffnung 102 aufweist. Bodenseitig an der Einlassöffnung ist ein Ventil 90, beispielsweise ein Scheibenventil angeordnet. Die Besonderheit des Pumpkopfes I gemäß Figur 6 liegt zudem darin, dass insbesondere die Bauteile 10, 40 und 60 hermetisch gegeneinander abgedichtet sind, so dass kein Luftaustausch der Inneren Volumina des Pumpkopfes I mit der Umgebung möglich ist. Beim Pumpkopf I gemäß Figur 6 handelt es sich somit um einen Airless-Pumpkopf.

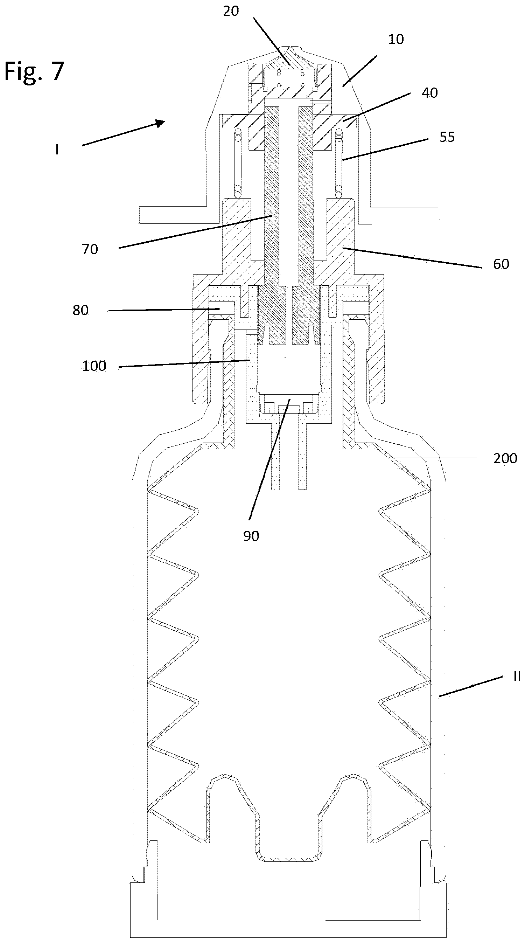

Figur 7 zeigt einen Anwendungsfall eines in Figur 6 dargestellten Pumpkopfes. Zur Vereinfachung sind lediglich die einzelnen Bestandteile mit Bezugszeichen gekennzeichnet, es gelten jedoch die identischen Ausführungsformen gemäß Figur 6.
   Betätigt ein Benutzer den Pumpkopf I in einer Dosiervorrichtung gemäß Figur 7 über den Griff 13, so wird zusammen mit dem Kopfteil 10 auch der gegenüber dem Bauteil 40 festgelegte Hohlkolben 70 nach unten in das Pumpengehäuse 100 gedrückt. Bei diesem Pumpvorgang bleibt das Ventil 90 verschlossen, so dass es zu einer Reduktion des Pumpenvolumens 101 kommt. Die im Volumen 101 befindliche Flüssigkeit wird dadurch durch den Durchtrittskanal 71 des Hohlkolbens 70 nach oben gepresst und entsprechend der bereits bei Figur 1 erläuterten Prinzipien durch die Durchtrittsöffnung 41 des Bauteils 40 und den sich ausbildenden Zwischenraum 10-20 zwischen Ventil 20 und Kopfteil 10 über die Auslassöffnung 11 ausgestoßen. Das Vorratsgefäß II ist in diesem Fall als starrer Behälter ausgebildet, in dem beispielsweise auch ein Faltenbalg 200 eingesetzt sein kann.

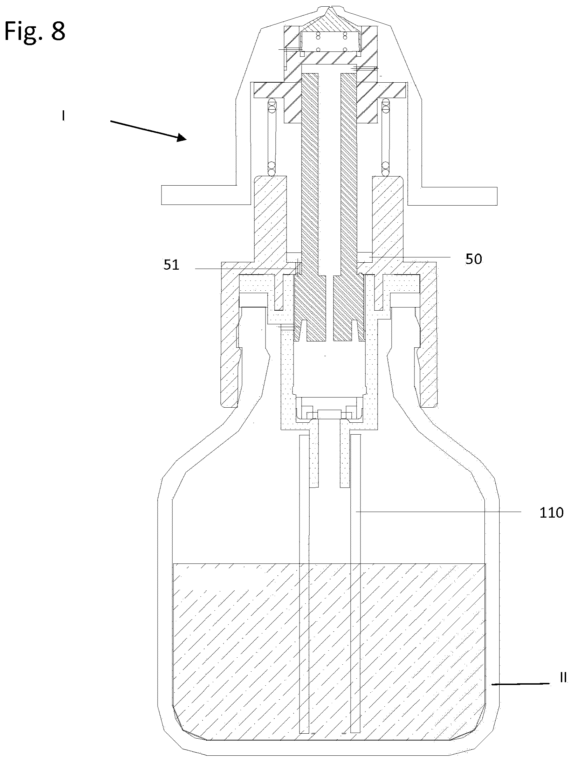

Figur 8 zeigt eine Variante des Pumpkopfes gemäß Figur 6 in einem Non-Airless-System. Es gelten identische Bezugszeichen wie in Figur 6 dargestellt, lediglich baulich abweichende Bestandteile sind mit separaten Bezugszeichen angegeben. Im Gegensatz zum Pumpkopf I gemäß Figur 6 sind hierbei die Bauteile 40 und 60 nicht hermetisch gegeneinander abgedichtet ausgebildet, sondern es ist ein Bakterienfilter 50 zwischen Pumpteilen 40 und 60 eingebaut. Das im Bauteil 60 ist zudem ein Durchtrittskanal 51 für Luft vorhanden, wodurch Umgebungsluft über den Durchtrittskanal 51 ins Innere der Dosiervorrichtung eintreten kann. Der Durchtrittskanal 51 ist dabei im Betätigungszustand geöffnet und wird im Lagerzustand vom Hohlkolben 70 verschlossen. Die Betätigung des Pumpkopfes aus dem Lagerzustand in den Betriebszustand erfolgt gemäß den Ausführungen zur Figur 7. Die im Vorratsbehältnis II bevorratete Inhaltslösung wird dabei mittels eines Steigrohres 110 in die Pumpkammer eingesaugt.

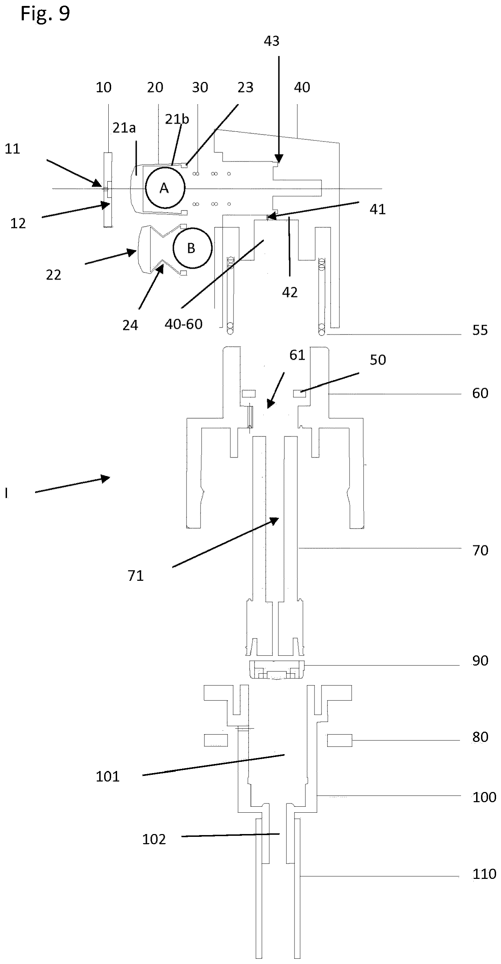

Figur 9 zeigt eine weitere Variante eines erfindungsgemäßen Pumpkopfes I, der im Figur 9 dargestellten Fall zur seitlichen Abgabe von Flüssigkeiten ausgebildet ist. Der Pumpkopf I ist hierbei insbesondere als Sprühkopf ausgebildet, d.h. die Ausgangsöffnung 11 umfasst Mittel zur Erzeugung eines Sprühnebels einer abzugebenden Flüssigkeit. Das Kopfteil 10 ist hierbei als Einsatz im Bauteil 40 ausgebildet. Im Zwischenraum zwischen Bauteil 40 und Bauteil 10 ist das Ventil 20 angeordnet, das identisch ausgebildet ist, wie im beispielhaften Fall von Figur 1. Dargestellt sind ebenso die Betriebszustände (A) und (B) des Ventils 20, das ansonsten auf identische Weise wie in Figur 1 beschrieben funktioniert. Der Pumpkopf I gemäß Figur 1 ist dabei als Non-Airless-Pumpkopf ausgebildet, d.h. die Bauteile 40 und 60 sind beweglich gegenüber einander ausgebildet, jedoch nicht hermetisch dichtend. Somit ist ein Bakterienfilter 50 zur Filtration eintretender Luft zwischen Bauteilen 40 und 60 vorhanden. Bauteil 40 verfügt über eine Durchgangsöffnung, die direkt vom Zwischenraum 40-60 in den Zwischenraum 10-20 zwischen Ventil 20 und Kopfteil 10 führt. Die Funktionsweise der übrigen Bestandteile 70-110 wurde bereits eingehend mit Hinblick auf Figuren 6 bis 8 erläutert und ist auch im Falle der Figur 9 identisch.

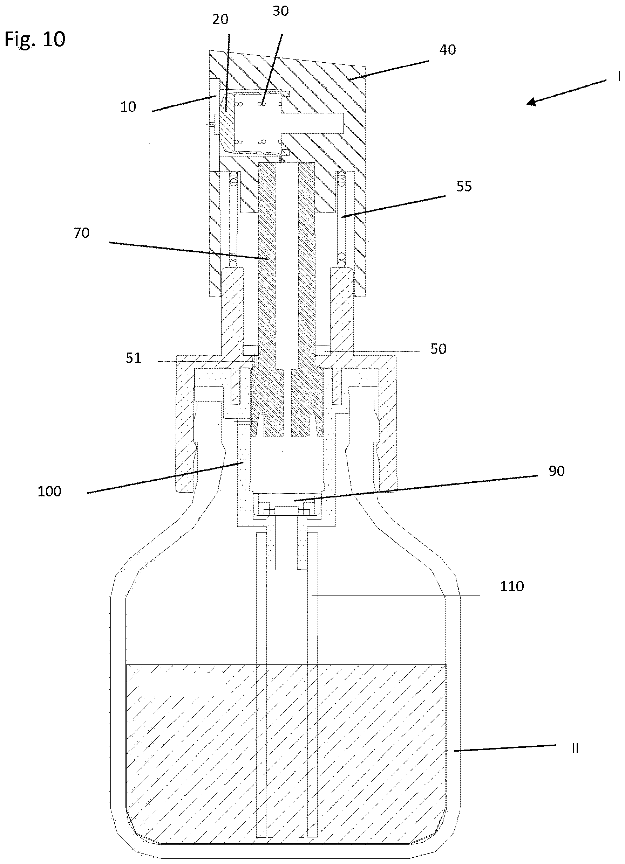

Figur 10 zeigt den Einbau des erfindungsgemäßen Pumpkopfes I gemäß Figur 9 in einem Non-Airless-System. Die Funktionsweise entspricht dabei der in Figur 8 dargestellten Funktionsweise.

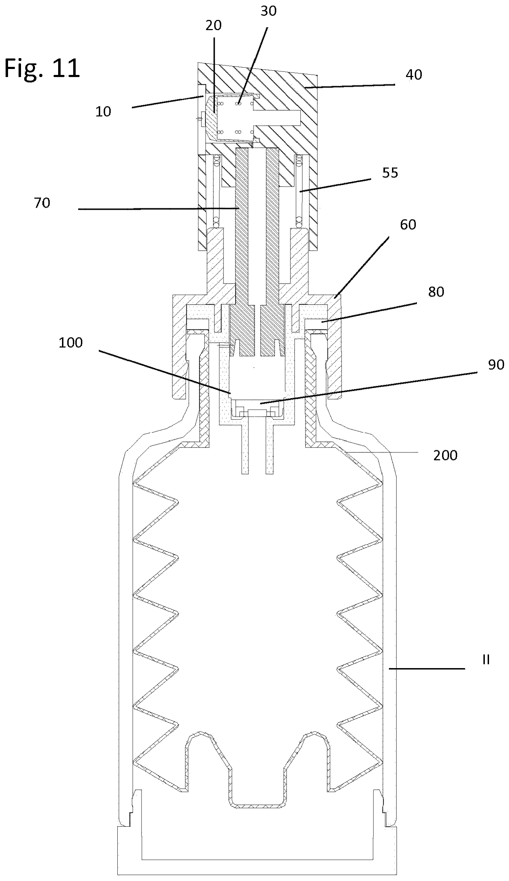

Figur 11 zeigt eine Variante des erfindungsgemäßen Pumpkopfes I gemäß Figur 9 als Airless-Pumpkopf. Hierbei ist kein Bakterienfilter 50 zwischen den Bauteilen 40 und 60 vorhanden, die Bauteile 40 und 60 sind dabei hermetisch dichtend übereinander gelagert, so dass kein Lufteintritt aus der Umgebung in den Innenraum des Pumpkopfes oder in das Vorratsbehältnis II stattfinden kann. Die Funktionsweise der Dosiervorrichtung ist ansonsten identisch mit der in Figur 7 dargestellten Funktionsweise.

## Patentansprüche

1. Pumpkopf (I) für eine Dosiervorrichtung zur dosierten Abgabe eines Fluids, umfassend
ein Kopfteil (10) mit einer Austrittsöffnung (11) für das abzugebende Fluid, wobei das Kopfteil eine innere Oberfläche (12) aufweist,
ein Ventil (20), das zumindest bereichsweise eine der inneren Oberfläche (12) des Kopfteils (10) entsprechende geometrische Ausgestaltung (22) aufweist,
ein Bauteil (40), das eine Durchtrittsöffnung (41) für das abzugebende Fluid aufweist, über die ein Einströmen des Fluids zwischen Kopfteil (10) und Ventil (20) unter Ausbildung eines Zwischenraums (10-20) zwischen Ventil (20) und Kopfteil in einem Betätigungszustand (B) ermöglicht ist,
wobei Kopfteil (10) und Bauteil (40) form- und kraftschlüssig unter Einschluss des Ventils (20) zwischen Kopfteil (10) und Bauteil (40) verbunden sind,
**dadurch gekennzeichnet, dass**
das Ventil (20) elastisch ist,
dass das Einströmen des Fluids unter Deformation des elastischen Ventils (20) ermöglicht wird,
und dass das elastische Ventil (20) in einem Lagerzustand (A) des Pumpkopfes vollflächig formschlüssig auf der inneren Oberfläche (12) des Kopfteils (10) aufliegt, so dass eine fluidische Dichtung zwischen Kopfteil (10) und Bauteil (40) gewährleistet ist, und dass
das elastische Ventil einen Kopf (21a) und eine elastische Wandung (21b) umfasst, wobei der Kopf eine der inneren Oberfläche (12) des Kopfteils (10) entsprechende geometrische Ausgestaltung (22) aufweist und die elastische Wandung (21b) verformbar ausgebildet ist, wobei
die elastische Wandung (21b) mindestens eine Sollknickstelle (24) aufweist, an der die elastische Wandung (21b) bei einem Überführen vom Lager- (A) in den Betätigungszustand (B) ab- bzw. einknickt.

2. Pumpkopf (I) nach Anspruch 1, **dadurch gekennzeichnet, dass** die elastische Wandung (21b) aus einem Film eines elastisch verformbaren Materials, insbesondere aus einem thermoplastischen Kunststoff, Gummi und/oder Silicon, bevorzugt mit einer Dicke von 0,03 bis 1 mm, bevorzugt 0,08 bis 0,5 mm, besonders bevorzugt 0,20 bis 0,30 mm gebildet ist und/oder der Kopf (21a) massiv ausgebildet ist.

3. Pumpkopf (I) nach vorhergehendem Anspruch, **dadurch gekennzeichnet, dass** Kopf (21a) und elastische Wandung (21b) einstückig ausgebildet sind.

4. Pumpkopf (I) nach einem der vorhergehenden Ansprüche, **dadurch gekennzeichnet, dass** das elastische Ventil (20) über mindestens ein Fixierelement (23) verfügt, über das das elastische Ventil (20) mit mindestens einem korrespondierendem Fixierelement (43) des Bauteils (40) kraftschlüssig verbunden ist, wobei bevorzugt das Fixierelement (23) des elastischen Ventils (20) und das Fixierelement (43) des Bauteils (40) als Einrastverbindung oder Schnappverbindung ausgebildet ist.

5. Pumpkopf (I) nach einem der vorhergehenden Ansprüche, **dadurch gekennzeichnet, dass** das Bauteil (40) eine Wandung (42) aufweist, die den Zwischenraum (10-20) abschließt, wobei über die Durchtrittsöffnung (41) eine fluidische Kommunikation des Zwischenraums (10-20) mit einem vom Zwischenraum (10-20) aus gesehen jenseits der Wandung (42) liegenden Bereich (40-60) ermöglicht ist.

6. Pumpkopf (I) nach vorhergehendem Anspruch, **dadurch gekennzeichnet, dass** die Durchtrittsöffnung (41) vom Bereich (40-60) unmittelbar durch die Wandung (42) geführt ist und in den Bereich (10-20) mündet, oder
im Bereich (40-60) durch eine seitliche Wandung (44) des Bauteils (40) durchgeführt wird, an einer äußeren Oberfläche des Bauteils (40) in einer Einkerbung, die vom Bauteil (10) begrenzt werden kann, geführt wird, und im Bereich (10-20) erneut durch die seitliche Wandung des Bauteils (40) geführt wird und in den Bereich (10-20) mündet.

7. Pumpkopf (I) nach einem der vorhergehenden Ansprüche, **dadurch gekennzeichnet, dass** zwischen elastischem Ventil (20) und Bauteil (40) ein Element (30), das eine Rückstellkraft auf das elastische Ventil (20) auswirkt, angeordnet ist, wobei die Rückstellkraft bewirkt, dass der im Betätigungszustand (B) ausgebildete Zwischenraum (10-20) unter Rückkehr in den Lagerzustand (A) geschlossen wird, wobei das Element (30) insbesondere eine Feder ist.

8. Pumpkopf (I) nach einem der vorhergehenden Ansprüche, **dadurch gekennzeichnet, dass** das Bauteil (40) an seinem dem elastischen Ventil (20) abgewandten Ende mit einem Bauteil (60) verbunden ist, über das der Pumpkopf (I) mit einem Vorratsgefäß (II) zur Bevorratung des abzugebenden Fluids verbindbar ist, wobei insbesondere
zwischen dem Bauteil (40) und dem Bauteil (60) mindestens ein Mittel (50) zur sterilen Filtration eintretender Luft vorhanden ist, insbesondere ein Bakterienfilter, oder
das Bauteil (40) gegenüber dem Bauteil (60) hermetisch dichtend ausgebildet ist.

9. Pumpkopf (I) nach vorhergehendem Anspruch, **dadurch gekennzeichnet, dass** das Bauteil (40) gegenüber dem Bauteil (60)
fixiert ist oder
beweglich ausgebildet ist, wobei zwischen dem Bauteil (40) und dem Bauteil (60) mindestens ein Mittel (55), das eine Rückstellkraft auf das Bauteil (40) ausübt, angeordnet ist, wobei das Bauteil (55) bevorzugt eine Feder ist.

10. Pumpkopf (I) nach einem der vorhergehenden Ansprüche, **dadurch gekennzeichnet, dass** das Bauteil (60) eine Aussparung (61), die bevorzugt zylindrisch ausgebildet ist, aufweist, in der ein Hohlkolben (70) mit einem Durchtrittskanal (71) beweglich führbar ist.

11. Pumpkopf (I) nach vorhergehendem Anspruch, **dadurch gekennzeichnet, dass** das Bauteil (60)
eine gegenüber dem Bauteil (40) abschließend ausgebildete Wandung (62) aufweist, die eine Durchtrittsöffnung (63) aufweist, die mit einem beweglichen Hohlkolben (70) verschließbar ist, wobei durch die Wandung (62) ein zwischen Bauteil (40) und Bauteil (60) mit der Durchtrittsöffnung (41) in fluidischer Kommunikation stehender Bereich bzw. Zwischenraum (40-60) ausgebildet ist, oder
gegenüber dem Bauteil (40) offen ausgebildet ist, wobei der Hohlkolben (70) so im Bauteil (60) angeordnet ist, dass die Durchtrittsöffnung (41) nicht vom Hohlkolben (70) verschlossen wird.

12. Pumpkopf (I) nach einem der beiden vorhergehenden Ansprüche, **dadurch gekennzeichnet, dass** der Hohlkolben (70) an seinem dem Bauteil (40) abgewandten Ende beweglich in ein Pumpgehäuse (100) geführt ist, das ein vom Pumpgehäuse (100) und Hohlkolben (70) definiertes Pumpvolumen (101) aufweist, wobei im Lagerzustand (A) das Pumpvolumen (101) maximiert und im Betätigungszustand (B) minimiert wird, wobei insbesondere
das Pumpgehäuse (100) einen bodenseitigen Einlass (102) umfasst, der bevorzugt mittels eines Ventils (90), insbesondere eines Scheibenventils oder Kugelventils während des Betätigungsvorgangs verschließbar und bei Überführen des Pumpkopfes vom Betätigungszustand (B) in den Lagerzustand (A) geöffnet werden kann, wobei insbesondere
am bodenseitigen Einlass (102) ein Steigrohr (110) angeordnet ist.

13. Pumpkopf (I) nach einem der vorhergehenden Ansprüche, **dadurch gekennzeichnet, dass** bei Verbindung des Pumpkopfes (I) über das Bauteil (60) mit dem Vorratsgefäß (II) eine Dichtung (80) zwischen Bauteil (60) und dem Vorratsgefäß (II), oder
über die Pumpkammer (100) mit dem Vorratsgefäß (II) eine Dichtung (80) zwischen Pumpkammer (100) und dem Vorratsgefäß (II)
angeordnet ist.

14. Pumpkopf (I) nach einem der vorhergehenden Ansprüche, **dadurch gekennzeichnet, dass** das Kopfteil (10) ein antibakterielles Material, bevorzugt Metalle oder Metallionen, insbesondere Silberpartikel oder Silberionen beinhaltet.

15. Dosiervorrichtung, umfassend einen mit einem Vorratsgefäß (II) verbundenen Pumpkopf (I) nach einem der vorhergehenden Ansprüche, wobei insbesondere das Vorratsgefäß (II)
als Quetschflasche oder als formfester Behälter ausgebildet ist, und/oder
einen Innenbeutel (200), der gegenüber dem Pumpkopf (I) hermetisch abgedichtet ist, umfasst, wobei der Innenbeutel (200) insbesondere als Faltenbalg ausgebildet ist.

## Claims

1. A pump head (I) for a metering device for the metered dispensing of a fluid, comprising:
a head part (10) including an outlet opening (11) for the fluid to be dispensed, the head part comprising an inner surface (12);
a valve (20), which, at least in regions, has a geometric configuration (22) corresponding to the inner surface (12) of the head part (10); and
a component (40) having a through-opening (41) for the fluid to be dispensed, via which an inflow of the fluid between the head part (10) and the valve (20) under formation of an intermediate space (10-20) between the valve (20) and the head part in an actuation state (B) is enabled;
wherein the head part (10) and the component (40) are connected in a form- and force-fit manner with enclosureof the valve (20) between the head part (10) and the component (40),
**characterized in that**
the valve (20) is elastic,
the inflow of the fluid is enabled under deformation of the elastic valve (20), and
the elastic valve (20), in a storage state (A) of the pump head, rests over the entire surface in a form-fit against the inner surface (12) of the head part (10) so that a fluidic seal between the head part (10) and the component (40) is ensured, and that
the elastic valve comprises a head (21a) and an elastic wall (21b), the head having a geometric configuration (22) corresponding to the inner surface (12) of the head part (10) and the elastic wall (21b) being configured to be deformable, wherein
the elastic wall (21b) has at least one predetermined buckling point (24) at which the elastic wall (21b) buckles downward or inward on a movement from the storage state (A) into the actuation state (B).

2. The pump head (I) according to claim 1, **characterized in that** the elastic wall (21b) is made from a film of an elastically deformable material, in particular from a thermoplastic material, rubber and/or silicone, preferably having a thickness of 0.03 to 1 mm, preferably 0.08 to 0.5 mm, and particularly preferably 0.20 to 0.30 mm, and/or the head (21a) being designed to be solid.

3. The pump head (I) according to the preceding claim, **characterized in that** the head (21a) and the elastic wall (21b) are designed in one piece.

4. The pump head (I) according to any one of the preceding claims, **characterized in that** the elastic valve (20) comprises at least one fixing element (23), by which the elastic valve (20) is connected in a force-fit manner to at least one corresponding fixing element (43) of the component (40), the fixing element (23) of the elastic valve (20) and the fixing element (43) of the component (40) preferably being designed as a detent connection or a snap-on connection.

5. The pump head (I) according to any one of the preceding claims, **characterized in that** the component (40) has a wall (42) that terminates the intermediate space (10-20), with a fluidic communication of the intermediate space (10-20) with a region (40-60) disposed at the other side of the wall (42), viewed from the intermediate space (10-20), being made possible via the passage opening (41).

6. The pump head (I) according to the preceding claim, **characterized in that** the passage opening (41)
is guided from the region (40-60) directly through the wall (42) and opens into the region (10-20), or
is guided, in the region (40-60), through a side wall (44) of the component (40), is guided on an outer surface of the component (40) in a notch, which can be delimited by the component (10), and is guided again, in the region (10-20), through the side wall of the component (40) and opens into the region (10-20).

7. The pump head (I) according to any one of the preceding claims, **characterized in that** an element (30), which exerts a restoring force on the elastic valve (20), is disposed between elastic valve (20) and the component (40), the restoring force causing the intermediate space (10-20) formed in the actuation state (B) to be closed with a return into the storage state (A), the element (30) in particular being a spring.

8. The pump head (I) according to any one of the preceding claims, **characterized in that** the component (40) is connected at its end remote from the elastic valve (20) to a component (60), via which component the pump head (I) is connectable to a storage vessel (II) for storing the fluid to be dispensed, wherein in particular
at least one means (50) for the sterile filtration of incoming air is present between the component (40) and the component (60), in particular a bacterial filter, or
the component (40) is designed to be hermetically sealing relative to the component (60).

9. The pump head (I) according to the preceding claim, **characterized in that** the component (40) is
fixed relative to the component (60) or
is designed to be movable, at least one means (55) which exerts a restoring force on the component (40) being disposed between the component (40) and the component (60), the component (55) preferably being a spring.

10. The pump head (I) according to any one of the preceding claims, **characterized in that** the component (60) has a recess (61), which is preferably designed to be cylindrical and in which a hollow piston (70) having a through-channel (71) can be movably guided.

11. The pump head (I) according to the preceding claim, **characterized in that** the component (60)
comprises a wall (62) that is designed to form a termination relative to the component (40) and has a through-opening (63), which can be closed with a movable hollow piston (70), a region or intermediate space (40-60) that is in fluidic communication with the through-opening (41) between the component (40) and the component (60) being formed through the wall (62), or
is designed to be open relative to the component (40), the hollow piston (70) being disposed in the component (60) such that the through-opening (41) is not closed by the hollow piston (70).

12. The pump head (I) according to any one of the two preceding claims, **characterized in that** the hollow piston (70), at the end thereof facing away from the component (40), is movably guided into a pump housing (100), which has a pump volume (101) defined by the pump housing (100) and the hollow piston (70), the pump volume being (101) maximized in the storage state (A) and minimized in the actuation state (B), in particular
the pump housing (100) including a base-side inlet (102), which can preferably be closed by means of a valve (90), in particular a disc valve or ball valve, during the actuation process and can be opened during the transfer of the pump head from the actuation state (B) to the storage state (A), in particular
a riser pipe (110) being disposed at the base-side inlet (102).

13. The pump head (I) according to any one of the preceding claims, **characterized in that**, when connecting the pump head (I)
via the component (60) to the storage vessel (II), a seal (80) is disposed between the component (60) and the storage vessel (II), or
via the pump chamber (100) to the storage vessel (II), a seal (80) is disposed between the pump chamber (100) and the storage vessel (II).

14. The pump head (I) according to any one of the preceding claims, **characterized in that** the head part (10) comprises an antibacterial material, preferably metals or metal ions, in particular silver particles or silver ions.

15. A metering device, comprising a pump head (I) according to any one of the preceding claims connected to a storage vessel (II), wherein in particular the storage vessel (II)
is designed as a squeeze bottle or as a rigid container, and/or
comprises an inner bag (200), which is sealed hermetically relative to the pump head (I), the inner bag (200) being in particular designed as a bellows.

## Revendications

1. Tête de pompage (I) pour un dispositif de dosage pour la distribution dosée d'un fluide, comprenant
une partie tête (10) avec une ouverture de sortie (11) pour le fluide à distribuer, dans laquelle la partie tête présente une surface intérieure (12),
une soupape (20), qui présente au moins par endroits une configuration géométrique (22) correspondant à la surface intérieure (12) de la partie tête (10),
une pièce (40), qui présente une ouverture de passage (41) pour le fluide à distribuer, par l'intermédiaire de laquelle le fluide peut d'écouler entre la partie tête (10) et la soupape (20), avec réalisation d'un espace intermédiaire (10-20) entre la soupape (20) et la partie tête dans un état d'actionnement (B),
dans laquelle la partie tête (10) et la pièce (40) sont reliées par coopération de formes et de forces avec inclusion de la soupape (20) entre la partie tête (10) et la pièce (40),
**caractérisée en ce que**
la soupape (20) est élastique,
que l'écoulement du fluide sous l'effet d'une déformation de la soupape (20) élastique est permis,
et que la soupape (20) élastique, dans un état de stockage (A) de la tête de pompage, repose entièrement par coopération de formes sur la surface intérieure (12) de la partie tête (10), de sorte qu'une étanchéité fluidique entre la partie tête (10) et la pièce (40) est garantie, et que
la soupape élastique comprend une tête (21a) et une paroi élastique (21b), dans laquelle la tête présente une configuration géométrique (22) correspondant à la surface intérieure (12) de la partie tête (10) et la paroi élastique (21b) est réalisée de manière déformable, dans laquelle
la paroi élastique (21b) présente au moins un point de flexion théorique (24), au niveau duquel la paroi élastique (21b), lors d'un passage de l'état de stockage (A) à l'état d'actionnement (B), se courbe ou se plie.

2. Tête de pompage (I) selon la revendication 1, **caractérisée en ce que** la paroi élastique (21b) est formée à partir d'un film d'un matériau élastiquement déformable, en particulier à partir d'un thermoplastique, caoutchouc et/ou silicone, de préférence avec une épaisseur de 0,03 à 1 mm, de préférence 0,08 à 0,5 mm, de manière particulièrement préférée 0,20 à 0,30 mm et/ou la tête (21a) est réalisée de manière massive.

3. Tête de pompage (I) selon la revendication précédente, **caractérisée en ce que** la tête (21a) et la paroi élastique (21b) sont réalisées d'une seule pièce.

4. Tête de pompage (I) selon l'une quelconque des revendications précédentes, **caractérisée en ce que** la soupape (20) élastique dispose d'au moins un élément de fixation (23), par l'intermédiaire duquel la soupape (20) élastique est reliée par coopération de forces à au moins un élément de fixation (43) correspondant de la pièce (40), dans laquelle de préférence l'élément de fixation (23) de la soupape (20) élastique et l'élément de fixation (43) de la pièce (40) sont réalisés sous la forme d'une liaison à encliquetage ou à enclenchement.

5. Tête de pompage (I) selon l'une quelconque des revendications précédentes, **caractérisée en ce que** la pièce (40) comprend une paroi (42) fermant l'espace intermédiaire (10-20), dans laquelle, par l'intermédiaire de l'ouverture de passage (41), une communication fluidique de l'espace intermédiaire (10-20) avec une zone (40-60) située de l'autre côté de la paroi (42), vu à partir de l'espace intermédiaire (10-20), est permise.

6. Tête de pompage (I) selon la revendication précédente, **caractérisée en ce que** l'ouverture de passage (41) est guidée à partir de la zone (40-60)
directement à travers la paroi (42) et débouche dans la zone (10-20), ou
est amenée à passer dans la zone (40-60) à travers une paroi latérale (44) de la pièce (40), est guidée sur une surface extérieure de la pièce (40) dans une entaille qui peut être délimitée par la pièce (10), et, est à nouveau guidée dans la zone (10-20)à travers la paroi latérale de la pièce (40), et débouche dans la zone (10-20).

7. Tête de pompage (I) selon l'une quelconque des revendications précédentes, **caractérisée en ce qu'**un élément (30) exerçant une force de rappel sur la soupape (20) élastique, est disposé entre la soupape (20) élastique et la pièce (40), dans laquelle la force de rappel a pour effet que l'espace intermédiaire (10-20) réalisé dans l'état d'actionnement (B) est fermé en revenant dans l'état de stockage (A), dans laquelle l'élément (30) est en particulier un ressort.

8. Tête de pompage (I) selon l'une quelconque des revendications précédentes, **caractérisée en ce que** la pièce (40) est reliée à son extrémité opposée à la soupape (20) élastique à une pièce (60), par l'intermédiaire de laquelle la tête de pompage (I) peut être reliée à un récipient de stockage (II) pour le stockage du fluide à distribuer, dans laquelle en particulier
au moins un moyen (50) pour la filtration stérile de l'air entrant est présent entre la pièce (40) et la pièce (60), en particulier un filtre bactérien, ou
la pièce (40) est réalisée de manière étanche hermétiquement par rapport à la pièce (60).

9. Tête de pompage (I) selon la revendication précédente, **caractérisée en ce que**, par rapport à la pièce (60), la pièce (40)
est fixée ou
est réalisée de manière mobile, dans laquelle au moins un moyen (55), qui exerce une force de rappel sur la pièce (40), est disposé entre la pièce (40) et la pièce (60), dans laquelle le moyen(55) est de préférence un ressort.

10. Tête de pompage (I) selon l'une quelconque des revendications précédentes, **caractérisée en ce que** la pièce (60) comprend un évidement (61), qui est réalisé de préférence de manière cylindrique, dans lequel un piston creux (70) avec un canal de passage (71) est guidé de manière mobile.

11. Tête de pompage (I) selon la revendication précédente, **caractérisée en ce que** la pièce (60)
comprend une paroi (62) réalisée de manière à être fermée par rapport à la pièce (40), la paroi (62) comprenant une ouverture de passage (63), qui peut être fermée avec un piston creux (70) mobile, dans laquelle une zone ou un espace intermédiaire (40-60) en communication fluidique avec l'ouverture de passage (41) entre la pièce (40) et la pièce (60) est réalisé(e) à travers la paroi (62), ou
est réalisée de manière ouverte par rapport à la pièce (40), dans laquelle le piston creux (70) est disposé dans la pièce (60) de sorte que l'ouverture de passage (41) n'est pas fermée par le piston creux (70).

12. Tête de pompage (I) selon l'une des deux revendications précédentes, **caractérisée en ce que** le piston creux (70) est guidé à son extrémité opposée à la pièce (40) de manière mobile dans un carter de pompe (100), qui présente un volume de pompage (101) défini par le carter de pompe (100) et le piston creux (70), dans laquelle, dans l'état de stockage (A), le volume de pompage (101) est augmenté au maximum et dans l'état d'actionnement (B) est réduit au minimum, dans laquelle en particulier
le carter de pompe (100) comprend une entrée (102) côté fond, qui peut être fermée pendant le processus d'actionnement de préférence au moyen d'une soupape (90), en particulier d'une soupape à disque ou d'une soupape à bille, et peut être ouverte lorsque la tête de pompage passe de l'état d'actionnement (B) dans l'état de stockage (A), dans laquelle en particulier
un tuyau montant (110) est disposé sur l'entrée côté fond (102).

13. Tête de pompage (I) selon l'une quelconque des revendications précédentes, **caractérisée en ce que**, lors de la liaison de la tête de pompage (I)
au récipient de stockage (II) par l'intermédiaire de la pièce (60), un joint (80) est disposé entre la pièce (60) et le récipient de stockage (II), ou
au récipient de stockage (II) par l'intermédiaire de la chambre de pompage (100), un joint (80) est disposé entre la chambre de pompage (100) et le récipient de stockage (II).

14. Tête de pompage (I) selon l'une quelconque des revendications précédentes, **caractérisée en ce que** la partie tête (10) comporte un matériau antibactérien, de préférence des métaux ou ions métalliques, en particulier des particules d'argent ou des ions argent.

15. Dispositif de dosage, comprenant une tête de pompage (I) selon l'une quelconque des revendications précédentes reliée à un récipient de stockage (II), dans lequel en particulier le récipient de stockage (II)
est réalisé sous la forme d'une bouteille compressible ou d'un contenant indéformable, et/ou
comprend un sachet intérieur (200), qui est étanchéifié de manière hermétique par rapport à la tête de pompage (I), dans lequel le sachet intérieur (200) est réalisé en particulier sous la forme d'un soufflet.
